# EUROPÄISCHE PATENTSCHRIFT

(11) **EP 1 143 839 B1**
(45) Veröffentlichungstag und Bekanntmachung des Hinweises auf die Patenterteilung: **02.07.2003**
(21) Anmeldenummer: 00915178.8
(22) Anmeldetag: 10.03.2000
(51) Int. Cl.: A47J 43/046

(54) **SICHERHEITSEINRICHTUNG FÜR EINEN BECHERMIXER**
SAFETY DEVICE FOR A BLENDER
DISPOSITIF DE SECURITE D'UN MIXEUR

(30) Priorität: 22.03.1999 DE 19912750
(43) Veröffentlichungstag der Anmeldung: 17.10.2001
(73) Patentinhaber: Braun GmbH, 61476 Kronberg (DE)
(72) Erfinder: RAFOLS, Robert, E-08105 Sant Fost de Campcentelles (ES); PENARANDA, Mariano, E-08005 Barcelona (ES); MASIP, Josep-Maria, E-08190 Sant Cugat del Vallés (ES); ROMAN, Jose Luis, E-08031 Barcelona (ES)
(86) Internationale Anmeldenummer: EP0002126
(87) Internationale Veröffentlichungsnummer: WO00056198

(56) Entgegenhaltungen:
- EP-A- 0 012 976
- FR-A- 1 327 796
- FR-A- 2 769 199
- GB-A- 1 341 180
- US-A- 5 779 358

## Beschreibung

Die Erfindung betrifft einen Bechermixer mit einer Sicherheitseinrichtung , der einen auf einen mit einem elektrischen Antriebsmotor ausgestatteten Sockel aufsetzbaren Mixbecher aufweist, wobei die Sicherheitseinrichtung innerhalb des Sockels Betätigungsglieder und einen davon betätigten, seriell in einer Speiseleitung des Antriebsmotors liegenden Sicherheitsschalter so aufweist, daß der Sicherheitsschalter von den Betätigungsgliedern zur Speisung des Antriebsmotors nur durch korrektes Aufsetzen des Mixbechers geschlossen werden kann, wobei die Betätigungsglieder durch zwei voneinander beabstandete Betätigungsstellen am unteren Rand des Mixbechers so betätigbar sind, daß der Sicherheitsschalter nur bei gleichzeitiger und gleichmäßiger Betätigung der Betätigungsglieder an beiden Betätigungsstellen schließbar ist.

Eine Sicherheitseinrichtung ist z.B. aus dem US-Patent Nr. 5 779 358 bekannt. Bei der bekannten Sicherheitseinrichtung wird ein Sicherheitsschalter, der in einer Speiseleitung für einen im Sockel liegenden Antriebsmotor liegt, durch eine den unteren Rand des Mixbechers bedeckende Schürze nur dann betätigt, wenn der Mixbecher korrekt auf den Sockel aufgesetzt, d. h. im bekannten Fall, aufgeschraubt ist. Dabei liegt der Sicherheitsschalter im Sokkelgehäuse so, daß er nur schwer versehentlich sondern nur durch den Rand der Schürze des Mixbechers betätigt werden kann. Solche, an.ihrem Rand mit einem Gewinde versehene Mixbecher sind vorteilhaft hinsichtlich der durch die Schraubverbindung bewirkten stabilen Verbindung des Mixbechers mit dem Sockel. Nachteilig ist dabei, daß das Ab- und Aufschrauben des Mixbechers auf den Sockel etwas umständlich und manchmal, wenn die Gewindegänge durch das Mixgut verklebt sind, nur mit hohem Kraftaufwand möglich ist. Um dieses Problem zu vermeiden, wurden auch schon Bechermixer vorgeschlagen, bei denen der Mixbecher auf den Sockel aufgesteckt wird, wobei auch dann Sorge dafür getragen werden muß, daß die Sicherheitseinrichtung zur Speisung des Motors nur betätigt werden kann, wenn der Mixbecher in korrekter Position auf den Sockel aufgesteckt wurde.

Aus der GB-A-1088019 ist ein Bechermixer bekannt, bei dem beim Einsetzen des Deckels sein topfförmiger Rand in eine Ringnut eingreift und dabei seitlich einen Schalter zum Einschalten des Messers auf einer Seite betätigt.

Aus der EP-A-012976 ist ebenfalls ein Bechermixer bekannt, bei dem am Deckel ein nach unten gerichteter Arm ausgebildet ist, der beim Einsetzen des Deckels auf dem Becher eine Gehäusebohrung durchdringt und ein mechanisches Schaltglied betätigt, von dem ein elektrischer Schalter eingeschaltet wird.

Schließlich ist noch aus der GB-A-1341180 ein Bechermixer der eingangs beschriebenen Art bekannt, bei dem beidseitig am Deckel Betätigungsnasen ausgebildet sind, die beim Aufsetzen des Deckels auf den Becher jeweisl diametral gegenüberliegende Gehäusebohrungen durchdringen und dort Tastglieder von elektrischen Schaltem betätigen, die dann das Einschalten des Elektromotors ermöglichen.

Es ist nun Aufgabe der Erfindung, eine Sicherheitseinrichtung für einen Bechermixer zu ermöglichen, die mit Sicherheit einen Antrieb der gefährlichen Messerschneiden durch den Antriebsmotor vermeidet, wenn der Mixbecher nicht oder nicht korrekt auf den Sockel aufgesteckt wurde.

Gemäß einem wesentlichen Aspekt verwendet die erfindungsgemäße Sicherheitseinrichtung das Prinzip, daß die Betätigungsglieder zur Betätigung des Sicherheitsschalters von zwei voneinander beabstandeten Betätigungsstellen am unteren Rand des Mixbechers separat aber so gemeinsam betätigbar sind, daß der Sicherheitsschalter nur bei gleichzeitiger und aber so gemeinsam betätigbar sind, daß der Sicherheitsschalter nur bei gleichzeitiger und gleichmäßiger Betätigung beider Betätigungsglieder durch die beiden Betätigungsstellen des Mixbechers, d. h. in dessen korrekter Steckposition schließbar ist.

Da es sich bei der hier beschriebenen Anwendung um einen Bechermixer handelt, der normalerweise in horizontaler Gebrauchslage betrieben wird, beziehen sich die Lagebezeichnungen "horizontal", "vertikal", "senkrecht", "radial" und "axial" auf diese Gebrauchslage des Mixers. Es ist aber hervorzuheben, daß die Funktion der erfindungsgemäßen Sicherheitseinrichtung auch in anderen Gebrauchslagen sichergestellt ist.

Um eine konstruktiv, vorteilhafte und sichere Lösung zu erzielen, ist der Wipphebel sowohl schwenk- wie axial verschiebbar (Anspruch 2). Hierdurch wird sichergestellt, daß nur dann, wenn der Wipphebel horizontal verschoben wird, also von der Anlagefläche des Mixbechers gleichmäßig nach unten gedrückt wird, der Mixbecher ordnungsgemäß aufgesetzt wurde. Nur dann kann das Gerät über den Wippschalter eingeschaltet werden.

Durch die Merkmale des Anspruchs 3 wird eine einfache, leicht verdrehbare und verschiebbare Schalterlösung erreicht. Entsprechend gilt dies auch für die Merkmale des Anspruchs 4.

Nach den Merkmalen des Anspruchs 5 weisen die Betätigungsglieder einen länglichen, normal horizontal liegenden Wipphebel aus isolierendem Material mit einer an den Abstand zwischen den Betätigungsstellen des Mixbechers angepaßten Länge auf, wobei der Wipphebel an seinen beiden Enden durch je einen innerhalb einer Bohrung in der oberen Wand des Sockels durch Druck der Betätigungsstellen des aufgesetzten Mixbechers vertikal beweglichen Betätigungsstift zu einer Wippbewegung innerhalb eines vorbestimmten Winkels in vertikaler Ebene kombiniert mit einer Schiebebewegung um eine vorbestimmte Strecke in vertikaler Richtung betätigbar ist, und dazu mittig in einem im Sockel befestigten Führungsteil geführt, und gleichzeitig mit einem Federelement elastisch in waagrechter Position zum Mixbecher hin vorgespannt ist, und der Sicherheitsschalter hat einen mit dem Wipphebel beweglichen und an dessen von den Betätigungsstiften abgewendeten Unterseite mittig befestigten elektrisch leitenden, in Längsrichtung des Wipphebels ragenden Kontaktstreifen mit einem Kontakt an jedem Ende und zwei einzelne, den Kontakten des Kontaktstreifens gegenüberliegende, am Sockel fixierte Festkontakte, so daß die Kontakte des beweglichen Kontaktstreifens mit den Festkontakten nur dann geschlossen und der Antriebsmotor gespeist werden kann, wenn der Mixbecher in korrekter Position auf den Sockel aufgesetzt wird und dabei die Betätigungsstellen des Mixbechers gleichzeitig und gleichmäßig beide Betätigungsstifte, den Wipphebel und den damit verbundenen beweglichen Kontaktstreifen gegen die Vorspannkraft des Federelements zumindest in der Endphase der Abwärtsbewegung horizontal nach unten auf die beiden Festkontakte des Sicherheitsschalters drücken. Mit dieser Lösung wird ein leicht bewegbarer Schalter mit hohem Sicherheitskomfort geschaffen.

Somit ist durch den zweiseitigen, an der Unterseite des in vertikaler Ebene beweglichen Wipphebels angebrachten Kontaktstreifen sichergestellt, daß der Sicherheitsschalter zur Speisung des Antriebsmotors nur dann geschlossen werden kann, wenn der Wipphebel zumindest in der Endphase der Abwärtsbewegung von den Betätigungsstellen am unteren Rand des Mixbechers gleichmäßig waagrecht heruntergedrückt wird. Nur in diesem Fall wird der Antriebsmotor über den Sicherheitsschalter und den seriell dazu liegenden Hauptschalter gespeist.

Wenn jemand unsachgemäß nur einen der Betätigungsstifte betätigt und dadurch den Wipphebel schräg nach unten drückt, bleibt der Stromkreis geöffnet und der Antriebsmotor kann nicht in Gang gesetzt werden.

Die Merkmale der Patentansprüche 6 bis 8 verleihen der Sicherheitseinrichtung einen hohen Sicherheitsgrad aufgrund ihrer stabilen, verhakungsfreien und gut dimensionierten Ausbildung.

Durch die Merkmale der Patentansprüche 9 und 10 wird ein einfaches Aufsetzen des Mixbechers auf den Gerätesockel erreicht und gleichzeitig bleiben dennoch, wenn ausnahmsweise äußerliche Verschmutzungen an den äußeren Teilen der Sicherheitseinrichtung auftreten, alle Teile voll funktionsfähig.

Die obigen und weitere vorteilhafte Merkmale der Erfindung werden in der nachstehenden, ein bevorzugtes Ausführungsbeispiel der erfindungsgemäßen Sicherheitseinrichtung beschreibenden Beschreibung noch deutlicher, wenn diese Beschreibung bezugnehmend auf die beiliegende Zeichnung gelesen wird.

Die Figuren 1A, 1B und 1C zeigen in schematischer perspektivischer Darstellung ein Ausführungsbeispiel jeweils eines Sockels von der Seite und von oben, eine mit "B" bezeichnete Detailansicht des oberen Sockelteils, an dem die Position eines Betätigungsstiftes genauer zu erkennen ist und ein Ausführungsbeispiel eines erfindungsgemäß gestalteten Mixbechers von unten und von der Seite.

Fig. 2 zeigt schematisch als Aufriß und als Teilschnitt ein Ausführungsbeispiel eines erfindungsgemäß gestalteten Sockels mit den im Sockel eingebauten Betätigungsgliedern.

Die Figuren 3A, 3B und 3C zeigen jeweils schematisch und im Aufriß wesentliche Teile eines Ausführungsbeispiels einer erfindungsgemäßen Sicherheitseinrichtung in drei unterschiedlichen Positionen zur Erläuterung ihrer Funktion.

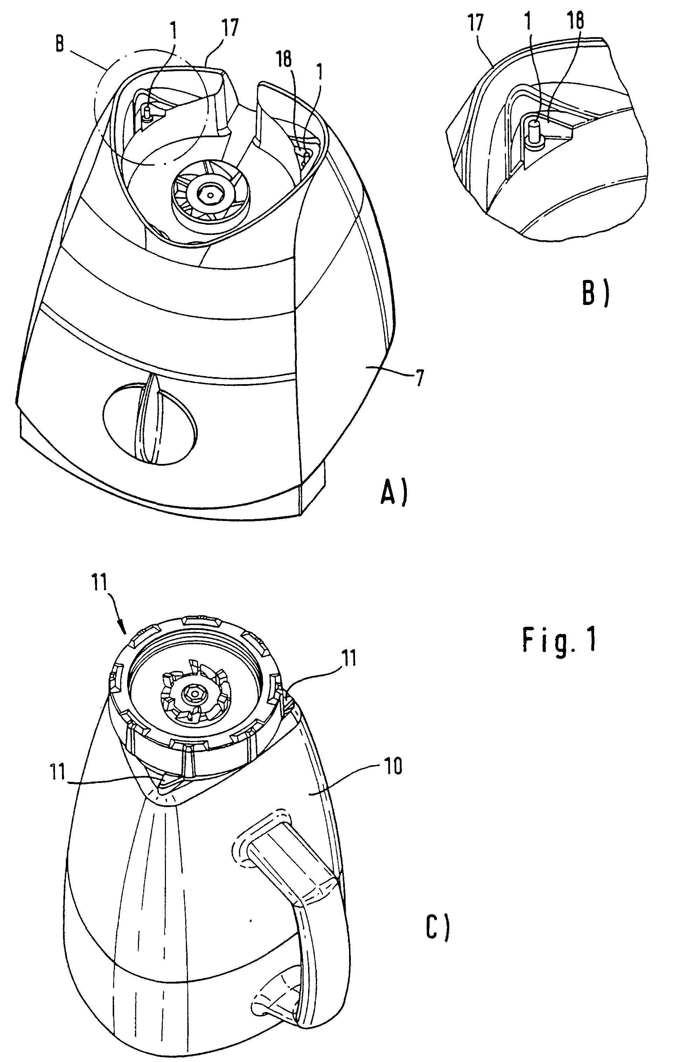

Fig. 1A zeigt in perspektivischer Darstellung von der Seite und von oben einen Sockel 7 eines mit einer erfindungsgemäßen Sicherheitseinrichtung versehenen Bechermixers, wobei der in Fig. 1C gezeigte Mixbecher 10 abgenommen ist und so einen Blick auf die durch eine Wand an der Oberseite des Sockels 7 ragenden Betätigungsstifte 1 gestattet. Wie in Fig. 1A erkenntlich, liegen zwei Stifte 1 in radialem Abstand von der Antriebswelle und im Abstand voneinander. Die Detailansicht in Fig. 1B zeigt deutlich, daß die Betätigungsstifte 1 innerhalb einer Gehäuseaussparung 18 von unten vertikal beweglich durch eine Öffnung in der oberen Gehäusewand des Sockels 7 ragen.

Fig. 1A zeigt außerdem, daß die Gehäusewand des Sockels 7 in ihrem oberen Bereich, dort, wo sie an den Mixbecher anschließt, eine Aufnahme 17 mit dreieckiger Kontur mit abgerundeten Ecken bildet und im Inneren einen kreisrunden Aufnahmering zur kraft- und formschlüssigen Aufnahme eines kreisrunden Befestigungsflansches des Mixbechers 10 (Fig. 1C) hat.

Bei dem in Fig. 1C von unten und von der Seite perspektivisch gezeigten Mixbecher 10 sind im unteren Randabschnitt radial und axial ragende Vorsprünge 11 als Betätigungsstellen für die Betätigungsstifte 1 der Sicherheitseinrichtung zu erkennen, die so gestaltet sind, daß sie beim korrekten Aufstecken des Mixbechers 10 über die in Fig. 1A gezeigten Betätigungsstifte 1 zu liegen kommen und beim weiteren Hinunterdrücken des Mixbechers die Betätigungsstifte 1 nach unten drücken. Obwohl dies in Fig. 1C nicht zu erkennen ist, sind drei um jeweils 120° zueinander versetzte Vorsprünge 11 vorgesehen, so daß der Mixbecher 10 in einer beliebigen von drei möglichen Winkelstellungen auf den Sockel 7 aufgesteckt werden kann, wobei dann in jedem Fall zwei der drei Vorsprünge 11 so liegen, daß sie die beiden Betätigungsstifte 1 der Sicherheitseinrichtung betätigen können.

Zu erwähnen ist noch, daß der in Fig. 1 gezeigte, mit der erfindungsgemäßen Sicherheitseinrichtung ausgestattete Bechermixer, wie bei solchen Bechermixern üblich, in im wesentlichen horizontaler Lage, d. h. z. B. auf einem Küchentisch betrieben wird. Der in Fig. 1C zu erkennende flanschartige untere Rand des Mixbechers 10 und der in Fig. 1A nicht detailliert gezeichnete Aufnahmering des Sockels sind so gestaltet, daß der Mixbecher 10 nicht auf den Sockel 7 aufgeschraubt sondern form- und kraftschlüssig aufgesteckt wird, wobei dann ein gezahntes Rad der vertikalen, zentral im Sockel 7 sitzenden, vom nicht gezeigten Antriebsmotor angetriebenen Antriebswelle in in Fig. 1C ersichtliche Antriebszähne des Messerrads an der Unterseite des Mixbechers 10 eingreift.

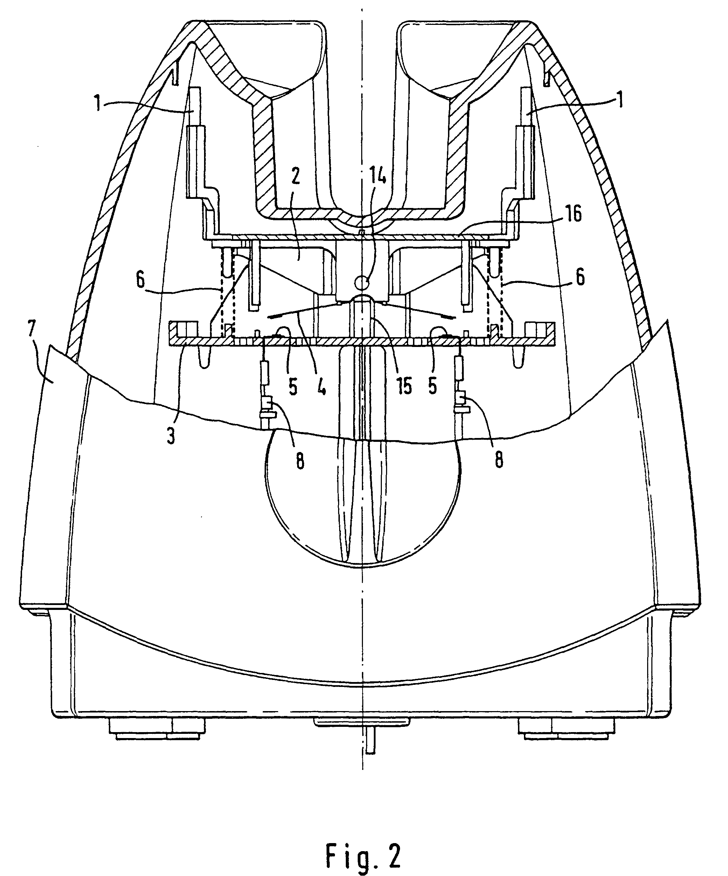

Nachstehend wird anhand des in Fig. 2 gezeigten Teilschnitts durch den Sockel 7 die Gestaltung der erfindungsgemäßen Sicherheitseinrichtung detailliert beschrieben.

Die bereits erwähnten, im Abstand durch Bohrungen in der Wand des Sockels 7 ragenden, Betätigungsstifte 1 sind starr durch einen aus Kunststoff bestehenden länglichen Arm 16 verbunden, der von oben auf einen Wipphebel 2 aufgesetzt ist.

Durch die besondere Art seiner Führung und Lagerung kann der Wipphebel 2, verursacht durch die Betätigungsstifte 1, eine Wippbewegung in vertikaler Ebene z. B. um einige 10 Grad nach links und rechts und kombiniert damit eine Schiebebewegung um eine bestimmte Strecke, z. B. einige mm in vertikaler Richtung ausführen. Diese kombinierte Wipp- und Schiebebewegung des Wipphebels 2 ist durch eine linke und rechte Vorspannfeder 6 in vertikaler Richtung nach oben vorgespannt. Die beiden Vorspannfedern 6 sind Schraubenfedern gleicher Länge und Federkraft, die zwischen der Unterseite des Wipphebels 2 und einem Bodenteil eines noch zu beschreibenden Führungsteils eingespannt sind und den Wipphebel 2 horizontal halten. Zum Einspannen der Vorspannfedern 6 dienen nicht näher bezeichnete, miteinander fluchtende Vorsprünge oder Stifte, die jeweils von der Unterseite des Wipphebels 2 nach unten und von der Oberseite des Bodenteils des genannten Führungsteil 3 nach oben ragen. Es ist zu bemerken, daß die Bezeichnungen "vertikal" und "horizontal" bzw. "nach oben", "nach unten" sich auf die in den Figuren 1 und 2 gezeigte normale Gebrauchslage des mit der Sicherheitseinrichtung ausgestatteten Bechermixers beziehen.

Der Wipphebel 2 ist symmetrisch zu einer strichpunktiert eingezeichneten Mittellängsachse gestaltet und weist zur Führung seiner Wippbewegung und seiner Schiebebewegung in vertikaler Ebene in seinem unteren Abschnitt zwei miteinander fluchtende horizontal ragende Führungsstifte 14 auf, von denen in Fig. 2 nur einer zu sehen ist. Der schon erwähnte, den Wipphebel 2 führende Führungsteil 3 hat zwei von seinem Bodenteil senkrecht nach oben ragende parallele Wände und darin zwei parallele, miteinander fluchtende, vertikale Führungsschlitze 15, von denen in Fig. 2 ebenfalls nur einer ersichtlich ist. In diesen Führungsschlitzen 15 sind die beiden Führungsstifte 14 des Wipphebels 2 mit Spiel geführt.

An der Unterseite des Wipphebels 2 ist ein länglicher Kontaktstreifen 4 des Sicherheitsschalters mittig befestigt, dessen beide gleich lange Schenkel federnd ausgebildet und etwas nach unten zu zwei einzelnen festen Kontakten 5 des Sicherheitsschalters abgebogen sind, so daß die beweglichen Kontakte des genannten Kontaktstreifens 4 über den einzelnen Festkontakten 5 stehen. Die Festkontakte 5 sind am Bodenteil des genannten Führungsteils 3 befestigt und durch nicht näher bezeichnete Anschlußmittel mit Verbindungsdrähten 8 so verbunden, daß der aus dem beweglichen Kontaktstreifen 4 und den Festkontakten 5 bestehende Sicherheitsschalter in Reihe zu dem in Fig. 2 ebenfalls erkennbaren manuell zu betätigenden Hauptschalter liegt. Die Betätigungsstifte 1, der sie verbindende auf dem Wipphebel 2 aufliegende Arm 16, der Wipphebel 2 und der Führungsteil 3 können aus isolierendem Kunststoff bestehen und als Spritzformteile hergestellt sein.

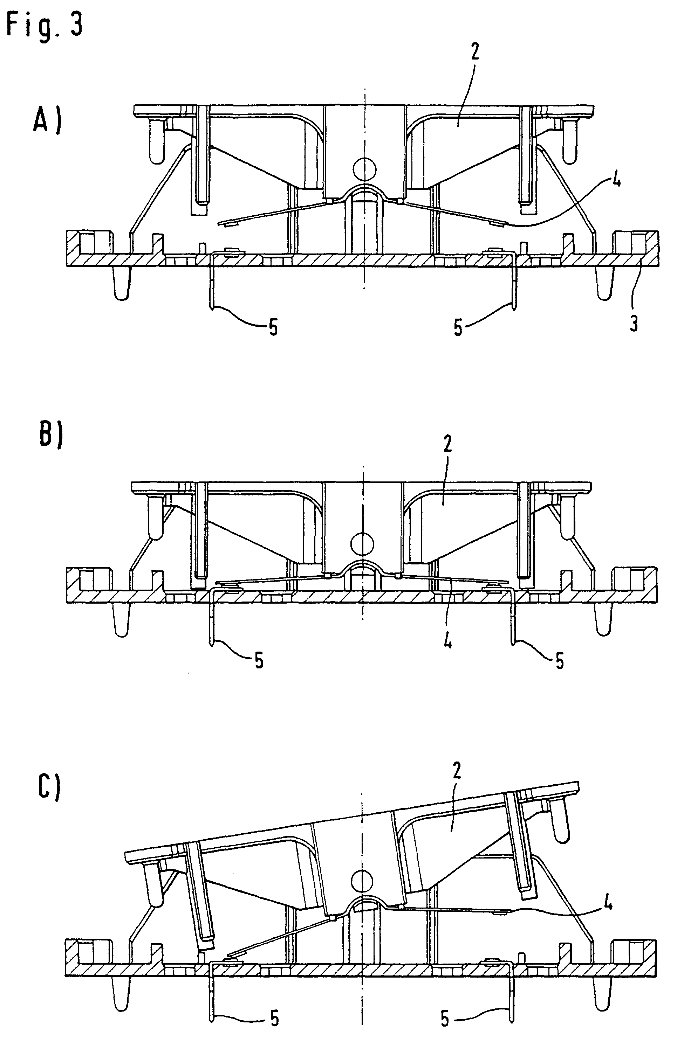

Die Figuren 3A, 3B und 3C zeigen die im Sockel 7 liegenden Betätigungsglieder und den Sicherheitsschalter der erfindungsgemäßen Sicherheitseinrichtung in drei unterschiedlichen Stellungen, Fig. 3A in unbetätigter Stellung und geöffnetem Sicherheitsschalter, wobei der Wipphebel 2 durch die Vorspannungskraft der Federn horizontal steht; Fig. 3B zeigt die korrekt betätigte Stellung der Sicherheitseinrichtung mit geschlossenem Sicherheitsschalter, wobei der Wipphebel 2 ebenfalls waagrecht, jedoch in seiner untersten Position steht; Fig. 3C schließlich zeigt die falsch betätigte Stellung, wobei nur ein Ende des Kontaktstreifens 4 Kontakt zu einem der Festkontakte 5 herstellt, wodurch der Sicherheitsschalter nicht geschlossen und der Antriebsmotor nicht gespeist werden kann.

Zur Vereinfachung sind in den Figuren 3A, 3B und 3C die Betätigungsstifte 1 mit dem sie verbindenden Arm und die Vorspannfedern 6 weggelassen.

Zusammengefaßt zeigt Fig. 3A eine Stellung der Sicherheitseinrichtung, bei der der Mixbecher 10 des Bechermixers nicht auf den Sockel 7 aufgesetzt ist und somit die (nicht dargestellten) Federn den Wipphebel 2 horizontal oben halten. Dabei bleibt der Sicherheitsschalter offen und der Antriebsmotor ausgeschaltet. Fig. 3B zeigt die Stellung der Sicherheitseinrichtung, bei der der Mixbecher 10 des Bechermixers korrekt auf den Sockel 7 aufgesetzt ist und die Vorsprünge 11 des Mixbechers 10 die (gleichfalls nicht gezeigten) Betätigungsstifte 1 und damit den Wipphebel 2 gleichzeitig und gleichmäßig gegen die Vorspannungskraft der (nicht gezeigten) Vorspannfedern horizontal nach unten drücken, wobei der Sicherheitsschalter geschlossen ist und der Antriebsmotor gespeist werden kann. Fig. 3C zeigt die Situation, wenn jemand fälschlicherweise nur einen Betätigungsstift 1 betätigt und damit den Wipphebel 2 in die dargestellte gekippte Position bringt, wobei der Sicherheitsschalter geöffnet bleibt und der Motor nicht gespeist werden kann.

## Patentansprüche

1. Bechermixer mit einer Sicherheits-einrichtung, der einen auf einen mit einem elektrischen Antriebsmotor ausgestatteten Sockel (7) aufsetzbaren Mixbecher (10) aufweist, wobei die Sicherheitseinrichtung innerhalb des Sockels (7) Betätigungsglieder (1, 2) und einen davon betätigten, seriell in einer Speiseleitung des Antriebsmotors liegenden Sicherheitsschalter (4, 5) so aufweist, daß der Sicherheitsschalter von den Betätigungsgliedern (1, 2) zur Speisung des Antriebsmotors nur durch korrektes Aufsetzen des Mixbechers (10) geschlossen werden kann, wobei die Betätigungsglieder (1, 2) durch zwei voneinander beabstandete Betätigungsstellen am unteren Rand des Mixbechers (10) so betätigbar sind, daß der Sicherheitsschalter (4, 5) nur bei gleichzeitiger und gleichmäßiger Betätigung der Betätigungsglieder an beiden Betätigungsstellen schließbar ist,
**dadurch gekennzeichnet,**
**daß** der Sicherheitsschalter ein Wipphebel (2) ist, der sowohl um eine Drehachse (14) kippbar als auch nach oben bzw. unten in einer Führung (15) verschiebbar ist.

2. Bechermixer mit einer Sicherheits-einrichtung, nach Anspruch 1,
**dadurch gekennzeichnet,**
**daß** der Wipphebel (2) in Längsrichtung symmetrisch geformt ist und in seiner Mitte einen Führungsstift (14) senkrecht zur Bewegungsebene des Wipphebels (2) und der Führungsteil (3) einen parallel zur Bewegungsebene des Wipphebels (2) führenden senkrechten Führungsschlitz (15) aufweist, indem der Führungsstift (14) mit Spiel geführt ist.

3. Bechermixer mit einer Sicherheits-einrichtung, nach Anspruch 2,
**dadurch gekennzeichnet,**
**daß** der Wipphebel (2) in der Mitte zwei miteinander fluchtende Führungsstifte (14) und der Führungsteil (3) zwei parallele senkrechte Wände aufweist, in denen zwei miteinander fluchtende Führungsschlitze (15) die beiden Führungsstifte (14) führen.

4. Bechermixer mit einer Sicherheits-einrichtung, nach Anspruch 1,
**dadurch gekennzeichnet,**
**daß** die Betätigungsglieder (1, 2) einen länglichen, normal horizontal liegenden Wipphebel (2) aus isolierendem Material mit einer an den Abstand zwischen den Betätigungsstellen (11) des Mixbechers (10) angepaßten Länge aufweisen, wobei der Wipphebel (2) an seinen beiden Enden durch je einen innerhalb einer Bohrung in der oberen Wand des Sockels (7) durch Druck der Betätigungsstellen (11) des aufgesetzten Mixbechers (10) vertikal nach unten beweglichen Betätigungsstift (1, 1) zu einer Wippbewegung innerhalb eines vorbestimmten Winkels in vertikaler Ebene kombiniert mit einer Schiebebewegung um eine vorbestimmte Strecke in vertikaler Richtung betätigbar ist, und dazu mittig in einem im Sockel (7) befestigten Führungsteil (3) geführt, und gleichzeitig mit einem Federelement (6) elastisch in waagrechter Position zum Mixbecher hin vorgespannt ist, und daß der Sicherheitsschalter (4, 5) einen mit dem Wipphebel (2) beweglichen und an seiner von den Betätigungsstiften (1, 1) abgewendeten Unterseite mittig befestigten elektrisch leitenden, länglichen Kontaktstreifen (4) mit einem Kontakt an jedem Ende, der in Längsrichtung des Wipphebels (2) ragt, und zwei den Kontakten des Kontaktstreifens (4) gegenüberliegende, am Sockel fixierte einzelne Festkontakte (5, 5) aufweist, so daß die Kontakte des beweglichen Kontaktstreifens (4) mit den Festkontakten (5, 5) nur dann geschlossen und der Antriebsmotor gespeist werden kann, wenn der Mixbecher (10) in korrekter Position auf den Sockel (7) aufgesetzt wird und dabei die Betätigungsstellen des Mixbechers gleichzeitig und gleichmäßig beide Betätigungsstifte (1, 1), den Wipphebel (2) und den damit verbundenen beweglichen Kontaktstreifen (4) gegen die Vorspannkraft des Federelements zumindest in der Endphase der Abwärtsbewegung horizontal nach unten auf die beiden Festkontakte (5, 5) des Sicherheitsschalters drücken.

5. Bechermixer mit einer Sicherheits-einrichtung, nach einem der Ansprüche 2 bis 4,
**dadurch gekennzeichnet,**
**daß** als Federelement (6) jeweils eine auf Druck beanspruchte Schraubenfeder (6, 6) gleicher Federkraft zwischen einem horizontalen Boden des Führungsteils (3) und einem gegenüberliegenden Endabschnitt des Wipphebels (2) in vertikaler Lage symmetrisch zur Mitte des Wipphebels eingespannt sind.

6. Bechermixer mit einer Sicherheits-einrichtung, nach einem der Ansprüche 2 bis 5,
**dadurch gekennzeichnet,**
**daß** die Betätigungsstifte (1, 1) starr durch einen länglichen von oben auf dem Wipphebel (2) liegenden Arm (16) verbunden sind.

7. Bechermixer mit einer Sicherheits-einrichtung, nach einem der Ansprüche 2 bis 6,
**dadurch gekennzeichnet,**
**daß** der Kontaktstreifen (4) an seinen beiden, von seinem mittigen Befestigungspunkt ragenden gleich langen Schenkeln federnd ausgebildet und diese Schenkel gleichmäßig etwas nach unten zu den Festkontakten (5) hin abgewinkelt sind.

8. Bechermixer mit einer Sicherheits-einrichtung, nach einem der Ansprüche 1 bis 7,
**dadurch gekennzeichnet,**
**daß** der untere Randabschnitt des Mixbechers (10) als die Betätigungsstellen radial und axial ragende Vorsprünge (11) aufweist, welche in Form und Lage an die Position der Betätigungsstifte (1, 1) angepaßt sind und daß der Oberteil des Sockels (7) eine den unteren Randabschnitt des Mixbechers (10) formschlüssig umschließende Aufnahme (17) mit die Vorsprünge (11) formschlüssig aufnehmenden Aussparungen (18) aufweist, wobei die Betätigungsstifte (1, 1) durch die Bohrungen innerhalb der Aussparungen (18) nach oben ragen.

9. Bechermixer mit einer Sicherheits-einrichtung, nach Anspruch 8,
**dadurch gekennzeichnet,**
**daß** der Mixbecher (10) drei Vorsprünge (11) und der Sockel (7) drei ihnen entsprechende Aussparungen (18) aufweist.

10. Bechermixer mit einer Sicherheits-einrichtung, nach einem der vorangehenden Ansprüche,
**dadurch gekennzeichnet,**
**daß** der Sicherheitsschalter (4, 5) in Reihe zu einem manuell zu betätigenden Hauptschalter geschaltet ist.

11. Bechermixer mit einer Sicherheits-einrichtung, nach einem der vorangehenden Ansprüche,
**dadurch gekennzeichnet,**
**daß** die Betätigungsglieder (1, 2) und der Führungsteil (3) jeweils aus Kunststoffspritzformteilen bestehen.

## Claims

1. A jug blender with a safety device, which has a blender jug (10) adapted for seating engagement with a base (7) equipped with an electric drive motor, said safety device having actuating members (1, 2) inside the base (7) as well as a safety switch (4, 5) actuated by said actuating members and arranged in series in a power supply line of the drive motor so that the actuating members (1, 2) can only close the safety switch to supply the drive motor if the blender jug (10) is correctly mounted, said actuating members (1, 2) being actuatable by two actuating points arranged in spaced relation to each other on the lower edge of the blender jug (10), in such manner that the safety switch (4, 5) can only be closed when the actuating members are actuated at both actuating points simultaneously and evenly,
**characterized in that** the safety switch is a rocking lever (2) which is arranged both for pivotal motion about a pivot (14) and for upward and downward sliding motion in a guide (15).

2. The jug blender with a safety device as claimed in claim 1,
**characterized in that** the rocking lever (2) is symmetrically shaped in longitudinal direction and has in its center a guide pin (14) perpendicular to the plane of motion of the rocking lever (2), and the guide part (3) has a vertical guide slot (15) which extends parallel to the plane of motion of the rocking lever (2) and in which the guide pin (14) is guided with clearance.

3. The jug blender with a safety device as claimed in claim 2,
**characterized in that** the rocking lever (2) has in its center two mutually aligned guide pins (14), and the guide part (3) has two parallel vertical walls in which two mutually aligned guide slots (15) are provided for guiding the two guide pins (14).

4. The jug blender with a safety device as claimed in claim 1,
**characterized in that** the actuating members (1, 2) include an elongate, normally horizontally extending rocking lever (2) made of an insulating material whose length is adapted to the distance between the actuating points (11) of the blender jug (10), said rocking lever (2) being actuatable at each of its two ends by a respective actuating pin (1, 1) movable vertically downwardly within a bore in the upper wall of the base (7) by pressure from the actuating points (11) of the mounted blender jug (10), causing the lever to execute a rocking motion within a predetermined angle in the vertical plane combined with a sliding motion by a predetermined distance in vertical direction, and being for this purpose centrally guided in a guide part (3) fastened in the base (7) while being at the same time elastically biased in horizontal position toward the blender jug by a spring element (6), and that the safety switch (4, 5) has an elongate, electrically conducting contact strip (4) that is movable with the rocking lever (2), is fixed centrally to the lever bottom side facing away from the actuating pins (1, 1), and has at each end a contact extending in the longitudinal direction of the rocking lever (2), as well as two individual fixed contacts (5, 5) fastened to the base at a location opposite the contacts of the contact strip (4), so that the contacts of the movable contact strip (4) can only be closed with the fixed contacts (5, 5) and power be supplied to the drive motor when the blender jug (10) is seated in its proper relationship upon the base (7), causing, as this occurs, the actuating points of the blender jug to urge simultaneously and evenly both actuating pins (1, 1), the rocking lever (2) and the connected movable contact strip (4) against the biasing force of the spring element horizontally downwardly into engagement with the two fixed contacts (5, 5) of the safety switch, at least in the end phase of the downward motion.

5. The jug blender with a safety device as claimed in any one of the claims 2 to 4,
**characterized in that** the spring element (6) is a respective helical spring (6, 6) exposed to pressure and of identical spring force, which is seated in a vertical position symmetrically to the center of the rocking lever between a horizontal bottom of the guide part (3) and an opposite end portion of the rocking lever (2).

6. The jug blender with a safety device as claimed in any one of the claims 2 to 5,
**characterized in that** the actuating pins (1, 1) are rigidly connected by an elongate arm (16) placed down onto the rocking lever (2).

7. The jug blender with a safety device as claimed in any one of the claims 2 to 6,
**characterized in that** the contact strip (4) is of a resilient configuration at its two legs of identical length extending from the strip's central fastening point, said legs being angled downwardly somewhat in uniform fashion in the direction of the fixed contacts (5).

8. The jug blender with a safety device as claimed in any one of the claims 1 to 7,
**characterized in that** the lower edge section of the blender jug (10) has radially and axially projecting shoulders (11) acting as the actuating points and adapted in form and position to the position of the actuating pins (1, 1), and that the upper part of the base (7) has a mount (17) encompassing the lower edge section of the blender jug (10) by positive engagement therewith, said mount having recesses (18) for accommodating the projecting shoulders (11) by positive engagement therewith, whereupon the actuating pins (1, 1) extend upwardly through the bores within the recesses (18).

9. The jug blender with a safety device as claimed in claim 8,
**characterized in that** the blender jug (10) has three projecting shoulders (11) and the base (7) has three mating recesses (18).

10. The jug blender with a safety device as claimed in any one of the preceding claims,
**characterized in that** the safety switch (4, 5) is arranged in series with a main switch actuated manually.

11. The jug blender with a safety device as claimed in any one of the preceding claims,
**characterized in that** the actuating members (1, 2) and the guide part (3) are each injection molded of plastics material.

## Revendications

1. Mixeur à godet comportant un dispositif de sécurité, qui présente un godet mixeur (10) pouvant être posé sur un socle (7), équipé d'un moteur électrique de commande, le dispositif de sécurité présentant à l'intérieur du socle (7) des éléments d'actionnement (1, 2) et un interrupteur de sécurité (4, 5) actionné par ceux-ci placé en série sur un câble d'alimentation du moteur de commande de manière à ce que l'interrupteur de sécurité puisse être fermé par les éléments d'actionnement (1, 2) pour l'alimentation du moteur de commande seulement par une mise en place correcte du godet mixeur (10), les éléments d'actionnement (1, 2) étant actionnables par deux points d'actionnement situés à distance l'un de l'autre au bord inférieur du godet mixeur (10) de manière à ce que l'interrupteur de sécurité (4, 5) ne puisse être fermé qu'en cas d'actionnement simultané et homogène des éléments d'actionnement aux deux points d'actionnement,
**caractérisé en ce que**
l'interrupteur de sécurité est un levier basculant (2) qui peut aussi bien basculer autour d'un axe de rotation (14) que se déplacer vers le haut ou le bas dans un guide (15).

2. Mixeur à godet comportant un dispositif de sécurité selon la revendication 1,
**caractérisé en ce que**
le levier basculant (2) est conformé symétriquement dans le sens longitudinal et présente en son centre une tige de guidage (14) perpendiculaire au plan de mouvement du levier basculant (2) et la pièce de guidage (3) une fente de guidage (15) verticale guidant parallèlement au plan de mouvement du levier basculant (2), du fait que la tige de guidage (14) est guidée avec du jeu.

3. Mixeur à godet comportant un dispositif de sécurité selon la revendication 2,
**caractérisé en ce que**
le levier basculant (2) présente au centre deux tiges de guidage (14) alignées l'une par rapport à l'autre et que la pièce de guidage (3) présente deux parois verticales parallèles dans lesquelles deux fentes de guidage (15) alignées l'une par rapport à l'autre guident les deux tiges de guidage (14).

4. Mixeur à godet comportant un dispositif de sécurité selon la revendication 1,
**caractérisé en ce que**
les éléments d'actionnement (1, 2) présentent un levier basculant oblong (2) qui se trouve normalement à l'horizontale, en matière isolante, d'une longueur adaptée à la distance entre les points d'actionnement (11) du godet mixeur (10), le levier basculant (2) étant actionnable à ses deux extrémités à chaque fois à travers un alésage de la paroi supérieure du socle (7) par pression sur les points d'actionnement (11) du godet mixeur (10) mis en place par la tige d'actionnement (1, 1) mobile verticalement vers le bas pour décrire un mouvement de bascule dans un angle prédéfini dans le plan vertical, combiné avec un mouvement de coulissement sur une distance prédéfinie dans le sens vertical, et pour cela guidé dans une pièce de guidage (3) fixée dans le socle (7), et en même temps précontraint élastiquement en position horizontale vers le godet mixeur à l'aide d'un élément à ressort (6), et que l'interrupteur de sécurité (4, 5) présente une bande de contact oblongue (4) mobile avec le levier basculant (2) et conductrice d'électricité, fixée au centre sur son côté inférieur détourné des tiges d'actionnement (1, 1), comportant un contact à chaque extrémité, qui dépasse dans le sens longitudinal du levier basculant (2) et deux contacts individuels fixes (5, 5) fixés au socle, opposés aux contacts de la bande de contact (4), de manière à ce que les contacts de la bande de contact mobile (4) avec les contacts fixes (5, 5) ne soient fermés et que le moteur de commande ne puisse être alimenté que si le godet mixeur (10) est posé en position correcte sur le socle (7) et que les points d'actionnement du godet mixeur poussent simultanément et de manière homogène les deux tiges d'actionnement (1, 1), le levier basculant (2) et la bande de contact (4) mobile qui y est reliée à l'encontre de la force de précontrainte de l'élément à ressort, du moins en phase finale du mouvement vers le bas, à l'horizontale vers le bas sur les deux contacts fixes (5, 5) de l'interrupteur de sécurité.

5. Mixeur à godet comportant un dispositif de sécurité selon une des revendications 2 à 4,
**caractérisé en ce que**
sont insérés comme élément à ressort (6) en position verticale symétriquement par rapport au centre du levier basculant respectivement un ressort hélicoïdal (6, 6) sollicité à la pression d'une même force de ressort entre une base horizontale de la pièce de guidage (3) et une section terminale opposée du levier basculant (2).

6. Mixeur à godet comportant un dispositif de sécurité selon une des revendications 2 à 5,
**caractérisé en ce que**
les tiges d'actionnement (1, 1) sont reliées rigidement par le haut par un bras oblong (16) reposant sur le levier basculant (2).

7. Mixeur à godet comportant un dispositif de sécurité selon une des revendications 2 à 6,
**caractérisé en ce que**
la bande de contact (4) est de conformation élastique sur ses deux branches de même longueur dépassant de son point de fixation central et que ces branches sont coudées d'une manière homogène quelque peu vers le bas vers les contacts fixes (5).

8. Mixeur à godet comportant un dispositif de sécurité selon une des revendications 1 à 7,
**caractérisé en ce que**
la section de bordure inférieure du godet mixeur (10) présente comme points d'actionnement des saillies (11) dépassant radialement et axialement qui sont adaptées en forme et en situation à la position des tiges d'actionnement (1, 1) et que la partie supérieure du socle (7) présente un support (17) entourant par liaison mécanique la section inférieure de bordure du godet mixeur (10) comportant des évidements (18) recevant par liaison mécanique les saillies (11), les tiges d'actionnement (1, 1) dépassant vers le haut dans les évidements (18) à travers les alésages.

9. Mixeur à godet comportant un dispositif de sécurité selon la revendication 8,
**caractérisé en ce que**
le godet mixeur (10) présente trois saillies (11) et le socle (7) trois évidements (18) leur correspondant.

10. Mixeur à godet comportant un dispositif de sécurité selon une-des revendications précédentes,
**caractérisé en ce que**
l'interrupteur de sécurité (4, 5) est connecté en série avec un interrupteur principal à actionner manuellement.

11. Mixeur à godet comportant un dispositif de sécurité selon une des revendications précédentes,
**caractérisé en ce que**
les éléments d'actionnement (1, 2) et la pièce de guidage (3) consistent respectivement en pièces moulées injectées en matière plastique.
